# EUROPÄISCHE PATENTSCHRIFT

(11) **EP 3 902 745 B1**
(45) Veröffentlichungstag und Bekanntmachung des Hinweises auf die Patenterteilung: **07.06.2023**
(21) Anmeldenummer: 19849020.3
(22) Anmeldetag: 23.12.2019
(51) Int. Cl.: B65B 29/02, B65B 1/24, B65B 59/04

(54) **KAFFEEMÜHLE MIT FÜLLVORRICHTUNG FÜR WIEDERBEFÜLLBARE KAFFEEKAPSELN**
COFFEE GRINDER HAVING FILLING DEVICE FOR REFILLABLE COFFEE CAPSULES
MOULIN À CAFÉ POURVU D'UN DISPOSITIF DE REMPLISSAGE POUR DES CAPSULES DE CAFÉ RECHARGEABLES

(30) Priorität: 27.12.2018 DE 102018009992
(43) Veröffentlichungstag der Anmeldung: 03.11.2021
(73) Patentinhaber: SCHMUCK, Jan, 52066 Aachen (DE)
(72) Erfinder: SCHMUCK, Jan, 52066 Aachen (DE)
(74) Vertreter: Michalski Hüttermann & Partner Patentanwälte mbB
(86) Internationale Anmeldenummer: PCT/DE2019/000333
(87) Internationale Veröffentlichungsnummer: WO 2020/135899

(56) Entgegenhaltungen:
- CA-A- 1 185 575
- CH-A- 282 039
- DE-A1-102016 014 089
- DE-B3-102016 121 332

## Beschreibung

Die vorliegende Erfindung betrifft eine Kaffeemühle mit einer Füllvorrichtung für wiederbefüllbare Kaffeekapseln.

Kapselkaffee bzw. Kapsel-Kaffeemaschinen haben eine große Verbreitung gefunden. Neben dem ersten Anbieter von Kapselkaffee sind inzwischen viele Kaffeehersteller im Markt tätig, die entweder eigene Kapselsysteme anbieten oder Kapseln die kompatibel sind mit denen anderer Anbieter. Die Kapseln bestehen meist aus Metall oder Kunststoff oder aus beiden Materialien. Durch die geringe Menge von meist ca. 5 g Kaffee pro Kapsel, ist die Menge an Metall- und Kunststoffabfall pro Kilogramm Kaffee relativ groß, da die Kapseln nach der einmaligen Nutzung entsorgt werden müssen.

Als Alternative zu den (Einweg-)Kapseln, werden seit einigen Jahren auch wiederbefüllbare Kapseln von verschiedenen Herstellern angeboten. Solche Kapseln sind z.B. beschrieben im EP 2 483 177 B1 und FR 2 905 683 A1. Diese bestehen aus Metall oder Kunststoff oder aus beidem und können nach der Verwendung gereinigt und mehrmals wiederbefüllt werden.

Diese wiederbefüllbaren Kapseln sind kompatibel mit Einwegkapseln bzw. den für Einwegkapseln vorgesehenen Kapsel-Kaffeemaschinen. Vorteil dieser wiederbefüllbaren Kapseln sind die reduzierte Müllmenge und die Möglichkeit den Kaffee selbst aussuchen zu können, wodurch die Kosten pro Portion erheblich reduziert werden können oder man bewusst eine bestimmte Art verwenden kann, z.B. Fair-Trade-Kaffee oder Bio-Kaffee.

Die wiederbefüllbaren Kapseln haben meist einen festen Deckel der entweder über ein Scharnier mit der Kapsel verbunden ist oder ein eigenes Bauteil ohne Verbindung zur Kapsel ist. Es gibt auch Kapseln bei denen der Deckel eine flexible Membran ist, die aufgeklebt wird und nach jeder Verwendung entfernt und durch eine neue ersetzt wird.

Die wiederbefüllbaren Kapseln können z.B. mit einem Löffel oder Trichter gefüllt werden. Teilweise bieten die Hersteller auch an der Kapsel zu befestigende Griffe an um diese dann direkt durch Schöpfen von Kaffeepulver zu befüllen, wobei danach der über den Kapselrand überstehende Kaffee abgestreift werden muss. Gleiches gilt, wenn die Kapsel mit den Fingern gefasst und durch Kaffeepulver gezogen wird. Der in die Kapsel gefüllt Kaffee muss vor dem Schließen der Kapsel mit dem Deckel komprimiert werden. Dazu sind für einige wiederbefüllbare Kapseln spezielle Hand-Stößel, sogenannte Tamper verfügbar.

Die wiederbefüllbaren Kapseln können mit gekauften bereits gemahlenem Kaffee gefüllt werden oder mit aus Kaffeebohnen selbst gemahlenem Kaffee.

Ob das Kaffeegetränk aus einer wiederbefüllbaren Kapsel einen guten Geschmack und eine gute Konsistenz hat, hängt neben der Kaffeesorte maßgeblich von der in die Kapsel eingefüllten Kaffeemenge und vom Mahlgrad ab. Daher ist die Verwendung von selbst gemahlenem Kaffee von Vorteil, da man dann den Mahlgrad optimal einstellen kann.

Ein Nachteil aller wiederbefüllbaren Kapseln ist bisher, dass diese nur schwer und kaum reproduzierbar mit der optimalen Menge Kaffeepulver gefüllt werden können. Nötig wäre hierfür das Abwiegen der benötigten Kaffeemenge für jede einzelne Kapsel was nicht wirklich praktikabel ist. Selbst wenn man eine Mühle mit einstellbarer Mahldauer verwendet, ist es umständlich, die jeweils für eine Kapselfüllung gemahlene Menge aufzufangen und auch vollständig in die Kapsel zu füllen und zu komprimieren. Das führt meistens zu einer nicht optimalen und stark schwankenden Qualität des zubereiteten Kaffees die dadurch weit unter der der Einwegkapseln zurückbleibt. Ein weiterer Nachteil ist die umständliche Handhabung der Kapseln beim Befüllen, die erheblich länger dauert als die Verwendung einer Einweg-Kapsel.

Ein weiterer Nachteil ist, dass beim Befüllen der Kapseln meist Kaffee auf den Rand der Kapseln und damit auf die Dichtflächen zwischen Kapsel und Deckel gelangt, die dann vor dem Schließen der Kapsel gesäubert werden müssen.

Mit einer Einrichtung für Kaffeemaschinen zur Befüllung von Kaffeekapseln befasst sich die CN 202 801 269 U, wobei es hier um eine Einrichtung zur Versiegelung von Kaffekapseln in Verbindung mit einer Kaffeemaschine geht.

Auch die EP 3 312 101 A1 stellt eine Einrichtung zur Befüllung von Kaffekapseln vor die eine Kaffeemühle enthält, und zwar in einer Variante, um automatisiert mehrere Kapseln hintereinander zu befüllen und zu versiegeln.

Die WO 2016/ 029 355 A1 stellt eine Einrichtung zur Befüllung von Kaffekapseln vor, die eine Kaffeemühle und eine Rösteinheit für Kaffeebohnen enthält, und zwar ebenfalls in einer Variante, um automatisiert Kapseln zu befüllen und zu versiegeln.

Die zuvor genannten Dokumente schlagen damit alle einen relativ komplizierten Füllvorgang vor, bedingt durch die Automatisierung der integrierten Vorrichtung zur Versiegelung der Kapsel.

Die Aufgabe, eine schnelle, saubere, und vor allem eine reproduzierbare optimale Füllung von wiederbefüllbaren Kaffeekapseln mit selbst gemahlenem Kaffee zu ermöglichen, wird durch die DE 10 2016 014 089 A1 gelöst.

Diese beschreibt eine Kaffeemühle mit einem Füllrohr und einem Stößel. In das Füllrohr tritt durch eine seitliche Zugangsöffnung gemahlener Kaffee ein, der dann in eine unter dem Füllrohr positionierte wiederbefüllbare Kapsel fällt. Oberhalb der seitlichen Zugangsöffnung ist im Füllrohr ein beweglicher Stößel positioniert oder dieser kann eingeführt werden, um in dem Füllrohr nach unten bewegt zu werden, um den in die Kapsel gefallenen Kaffee zu komprimieren, sobald die Füllung der Kapsel abgeschlossen ist. Durch das Füllrohr und die nah am Füllrohr anliegende Kapsel ist gewährleistet, dass immer die gesamte gemahlene Kaffeemenge in die Kapsel gelangt.

Um die Kapsel unter dem Füllrohr zu positionieren wird am Füllrohr selbst oder darunter eine Halterung vorgeschlagen, welche die Kapsel so aufnimmt, dass diese mittig und bevorzugt möglichst nah unter dem Füllrohr positioniert ist und gehalten wird, insbesondere während des Einfüllens und Komprimierens des Kaffeepulvers.

Weiterhin wird vorgeschlagen, dass die Halterung für die Kapsel bevorzugt so ausgebildet sein kann, dass die Kapsel von der Seite bzw. horizontal unter das Füllrohr geschoben wird, was z.B. dadurch erfolgen, dass es für eine Kapsel mit einem flanschförmigen Rand zwei sich gegenüberliegende horizontale U-förmige Führungen gibt, welche den Rand der Kapsel aufnehmen und diese sich damit horizontal einschieben lässt und gleichzeitig vertikal direkt unter dem Füllrohr gehalten wird. Bei Kapseln ohne flanschförmigen Rand wird vorgeschlagen, dass die Kapsel von unten unterstützt und durch seitliche Führungsflächen geführt werden könnte, so dass diese ebenfalls horizontal verschiebbar ist und in einer vertikalen Position unter dem Füllrohr gehalten wird. Die Halterung ist in beiden Ausführungen unbeweglich an der Kaffeemühle montiert.

Desweiteren wird ausgeführt, dass nach dem Komprimieren des gemahlenen Kaffees in der Kapsel durch Betätigen des Stößels dieser unter dem Rand der Kapsel liegt, wenn sie nicht überfüllt wurde. Die Kapsel kann dann aus der Halterung herausgezogen werden, ohne dass überstehendes Kaffeepulver vom unteren Füllrohrrand aus der Kapsel herausgeschoben wird. Dadurch ist eine sehr schnelle und saubere Befüllung der Kapsel möglich, die sich auf das Einschieben der Kapsel, das Starten des Mahlvorgangs, das Betätigen des Stößels und das Herausnehmen der Kapsel beschränkt.

Der Nachteil dieser Erfindung ist, dass die vorgeschlagene Ausführung der Halterung jeweils genau zum Querschnitt der Kapsel passen muss damit diese beim Einschieben ausreichend genau unter dem Füllrohr positioniert wird, bzw. ohne nennenswertes Spiel in der Halterung gehalten wird. Das gilt sowohl für Kapseln mit Rand als auch für solche ohne Rand. Damit ist die in der DE 10 2016 014 089 A1 vorgeschlagene Erfindung aufgrund der vorgeschlagenen Halterung jeweils nur für eine bestimmte wiederbefüllbare Kapsel geeignet.

Dieser Nachteil soll durch die nachfolgend beschriebene Erfindung gelöst werden, die für rotationssymmetrische wiederbefüllbare Kapseln mit einem Durchmesser unterhalb des Flansches von 23 mm bis zu 75 mm und einer Höhe von bis zu 55 mm oder für nicht rotationssymmetrische wiederbefüllbare Kapseln mit einer Größe von bis zu 75 mm x 75 mm im Umfassungsquadrat unterhalb des Flansches und einer Höhe von bis zu 60 mm geeignet ist.

Die Erfindung ist in den unabhängigen Ansprüchen beschrieben. Bevorzugte Ausgestaltungen der Erfindung finden sich in den Unteransprüchen.

Eine Kaffeemühle mit einem Füllrohr und einem Stößel, wie in der DE 10 2016 014 089 A1 beschrieben, wird mit einer Halterung für eine wiederbefüllbare Kapsel ausgeführt, bei der die Aufnahme für die Kapsel jedoch beweglich ausgeführt ist. Dadurch kann diese zusammen mit der Kapsel unter das Füllrohr oder von dort weg bewegt werden. Das kann entweder durch eine seitliche oder horizontale Schwenkbewegung der Aufnahme erfolgen, oder durch eine lineare Bewegung der Aufnahme. Die Aufnahme für die Kapsel verfügt auf dabei über eine Vertiefung welche eine wiederbefüllbare Kapsel aufnahmen kann. Die Aufnahme für die Kapsel kann dabei so ausgeführt sein, dass sie entweder selbst leicht ausgetauscht werden kann oder über einen austauschbaren Einsatz verfügt welcher die Kapsel aufnimmt. Durch verschiedene Ausführungen der Vertiefung zur Aufnahme der Kapsel kann die Kaffeemühle für verschiedene wiederbefüllbare Kapseln verwendet werden.

Zudem ist es bei dieser Erfindung möglich, die Aufnahme für die Kapsel gegen einen Behälter mit größerem Volumen auszutauschen. Dadurch können mit der Kaffeemühle auch größere Mengen Kaffeepulver gemahlen werden, so dass diese damit auch für andere Zwecke wie zum Beispiel die Bereitung eines Filterkaffees genutzt werden kann.

In der nachfolgenden Beschreibung wird auf die beiliegenden Zeichnungen Bezug genommen:
Kaffeemühle meint jegliche Art von Kaffeemühle, welche das gemahlene Kaffeepulver durch eine Ausgabeöffnung während des Mahlvorgangs ausgibt.

Zugangsöffnung meint einen Kanal, durch den das gemahlene Kaffeepulver von der Ausgabeöffnung der Kaffeemühle von selbst in das Füllrohr rutschen kann, bedingt durch eine ausreichende Neigung des Kanals. Die Zugangsöffnung ist während der Benutzung fest mit der Kaffeemühle verbunden.

Füllrohr meint einen seitlich geschlossenen aber oben und unten offenen Raum in dem ein Stößel vertikal auf und ab bewegt werden kann, der über eine seitliche Öffnung verfügt, durch die das gemahlene Kaffeepulver aus der Zugangsöffnung in das Füllrohr fallen kann und durch dieses hindurch in die darunter positionierte wiederbefüllbare Kapsel. Das Füllrohr ist während der Benutzung fest mit der Kaffeemühle verbunden.

Aufnahme für die Kapsel meint ein Bauteil, welches gegenüber dem Füllrohr und damit auch der Kaffeemühle beweglich an derselben angebracht ist, welches auf der Oberseite über eine Vertiefung verfügt in die eine wiederbefüllbare Kapsel eingelegt werden kann und aufgrund der Formgebung der Vertiefung in dieser Position gehalten wird. Die Verbindung zur Kaffeemühle wird über eine Halterung hergestellt, an die die Aufnahme für die Kapsel beweglich montiert ist, bzw. beweglich gehalten wird.

Halterung meint eine Struktur, welche die Verbindung zwischen der Aufnahme für die Kapsel und der Kaffeemühle herstellt. Diese hält die Aufnahme für die Kapsel entweder direkt über eine entsprechende Formgebung oder mittels eines weiteren Bauteils wie zum Beispiel einer Struktur mit der Funktion einer Achse. Die Halterung kann ein eigenes Bauteil sein, welches an die Kaffeemühle angebaut wird, oder sie kann integraler Bestandteil eines Bauteils der Kaffeemühle sein, zum Beispiel eines Gehäuseteils.

Austauschbarer Einsatz meint ein separates Bauteil welches die Vertiefung für die Kapsel enthält, falls diese nicht direkt in der Aufnahme für die Kapsel eingebracht ist. Wenn ein austauschbarer Einsatz verwendet wird, dann wird dieser immer in der Aufnahme für die Kapsel montiert.

Struktur mit der Funktion einer Achse meint entweder eine oder mehrere separate Achsen, oder eine oder mehrere Strukturen welche integraler Bestandteil entweder der Aufnahme für eine wiederbefüllbare Kapsel (5) oder der Halterung (7) sein können und die eine Drehbewegung eines anderes Bauteils um sich selbst ermöglichen.

Die vertikale Struktur mit der Funktion einer Achse kann dabei entweder eine oder mehrere separate Achsen sein, oder eine oder mehrere Strukturen, welche integraler Bestandteil entweder der Aufnahme für eine wiederbefüllbare Kapsel oder der Halterung sind.

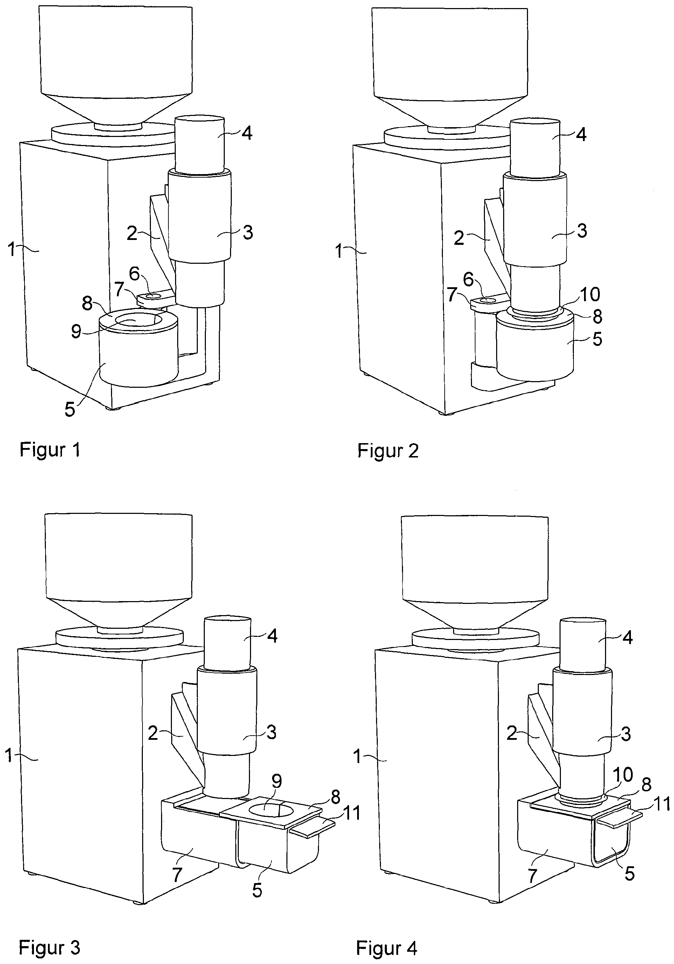

Figur 1 und 2 zeigen ein bevorzugtes Ausführungsbeispiel einer Mühle mit zur Seite schwenkbarer Aufnahme für eine Kapsel bestehend aus einer Kaffeemühle (1) mit seitlicher Zugangsöffnung (2) durch die das gemahlene Kaffeepulver in das Füllrohr (3) gelangt und darin geführtem Stößel (4). Unterhalb des Füllrohrs (3) befindet sich eine Aufnahme für die Kapsel (5) die zu einer Seite hin schwenkbar ist. Diese rotiert dabei um eine vertikale Struktur mit der Funktion einer Achse (6) welche ein separates Bauteil ist und in einer Halterung (7) befestigt ist, zum Beispiel indem es am unteren Ende über ein Außengewinde verfügt, und von unten in ein Innengewinde in der Halterung (7) geschraubt wird. Die Halterung (7) ist fest mit dem Gehäuse der Kaffeemühle verbunden. Dabei kann sie entweder ein an der Kaffeemühle (1) montiertes separates Teil sein, oder ein integraler Bestandteil des Gehäuses der Kaffeemühle. Die Halterung (7) ist hier so ausgeführt, dass sie die Aufnahme für die Kapsel (5) von unten unterstützt und von oben darüber greift. Dadurch kann die Aufnahme für die Kapsel (5) nur nach entfernen der Struktur mit der Funktion einer Achse (6) von der Kaffeemühle abgenommen werden. Alternativ kann die Halterung (7) auch so ausgeführt sein, dass sie die Aufnahme für die Kapsel (5) nur von unten unterstützt und diese von oben auf die Struktur mit der Funktion einer Achse (6) aufgesteckt wird. Das ist dann sinnvoll, wenn man die Vertiefung (9) zur Aufnahme für die Kapsel nicht in einem austauschbaren Einsatz (8) anordnet, sondern direkt in der Aufnahme für die Kapsel (5). Dann kann die Aufnahme für die Kapsel (5) einfach nach oben abgezogen werden um sie zu reinigen oder auszutauschen. Die Struktur mit der Funktion einer Achse (6) kann auch so ausgeführt sein, dass sie von oben oder der Seite nicht sichtbar ist, indem Sie ein separates Bauteil ist und von oben in der Halterung montiert wird.

In diesem Ausführungsbeispiel verfügt die Aufnahme für die Kapsel (5) über einen austauschbaren Einsatz (8) der nach oben aus der Aufnahme für die Kapsel (5) herausgenommen werden kann, mit einer Vertiefung (9) die jeweils für einen bestimmten Typ von Kapseln passt. In die Vertiefung (9) wird eine Kapsel (10) eingesetzt. In diesem Beispiel sind die Aufnahme für die Kapsel (5), die Struktur mit der Funktion einer Achse (6), die Halterung (7) und der austauschbare Einsatz (8) jeweils als separate spritzgegossene Kunststoffteile vorgesehen. Sie können jedoch auch aus Metall gefertigt werden, zum Beispiel als Leichtmetall-Druckgussteile.

Figur 3 und 4 zeigen ein weiteres Ausführungsbeispiel mit einer linear beweglichen Aufnahme für eine Kapsel bestehend aus einer Kaffeemühle (1) mit seitlicher Zugangsöffnung (2) durch die das gemahlene Kaffeepulver in das Füllrohr (3) gelangt und darin geführtem Stößel (4). Unterhalb des Füllrohrs (3) befindet sich eine Aufnahme für die Kapsel (5) die in einer linearen Bewegung unter dem Füllrohr (3) heraus nach vorne gezogen werden kann. Dazu ist auf der Vorderseite der Aufnahme für die Kapsel (5) ein Griff (11) angeordnet. Die Aufnahme für die Kapsel (5) wird einer Halterung (7) geführt. Bei der entspricht der innere Querschnitt in Bewegungsrichtung dem der Aufnahme für die Kapsel (5) um diese mit wenig Spiel bei der linearen Bewegung zu führen. Alternativ kann die Aufnahme für die Kapsel (5) auch über zwei seitliche Nuten in Bewegungsrichtung verfügen in welche zwei Federn die an der Halterung (7) angebracht sind eingreifen um die Kontaktfläche zwischen Aufnahme für die Kapsel (5) und Halterung (7) zu verringern, was zu einer leichteren Beweglichkeit führt. Die lineare Bewegung der Aufnahme für die Kapsel (5) kann durch einen Anschlag begrenzt werden, so dass diese nur bis zu einem bestimmten Punkt aus der Halterung (7) herausgezogen werden kann, der eine Entnahme der Kapsel (10) nach oben aus der Aufnahme für die Kapsel (5) erlaubt.

In diesem Ausführungsbeispiel verfügt die Aufnahme für die Kapsel (5) über einen austauschbaren Einsatz (8) der nach oben aus der Aufnahme für die Kapsel (5) herausgenommen werden kann, mit einer Vertiefung (9) die jeweils für einen bestimmten Typ von Kapseln passt. In die Vertiefung (9) wird eine Kapsel (10) eingesetzt. In diesem Beispiel sind die Aufnahme für die Kapsel (5), der austauschbare Einsatz (8) und die Halterung (7) jeweils als separate spritzgegossene Kunststoffteile vorgesehen. Der Griff (11) ist als integraler Bestandteil der Aufnahme für die Kapsel (5) ausgeführt. Alle Teile können jedoch auch aus Metall gefertigt werden, zum Beispiel als Leichtmetall-Druckgussteile.

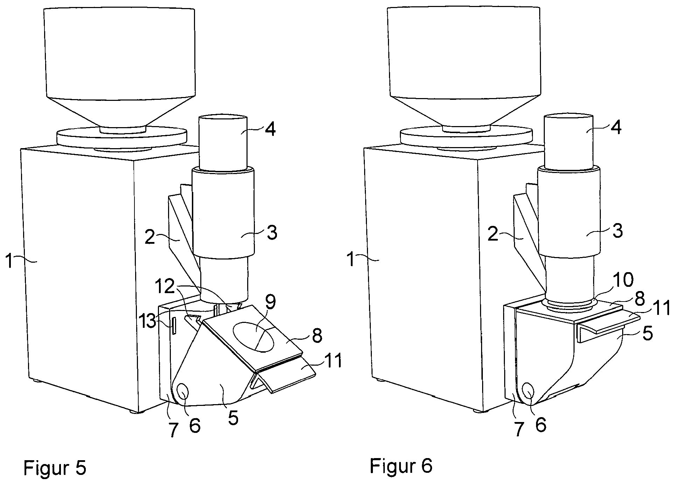

Figur 5 und 6 zeigen ein weiteres Ausführungsbeispiel mit einer horizontal schwenkbaren Aufnahme für eine Kapsel bestehend aus einer Kaffeemühle (1) mit seitlicher Zugangsöffnung (2) durch die das gemahlene Kaffeepulver in das Füllrohr (3) gelangt und darin geführtem Stößel (4). Unterhalb des Füllrohrs (3) befindet sich eine Aufnahme für die Kapsel (5) die in einer horizontalen Schwenkbewegung unter dem Füllrohr (3) heraus nach vorne gekippt werden kann. Diese rotiert dabei um eine horizontale Struktur mit der Funktion einer Achse (6) welche in einer Halterung (7) befestigt ist. In diesem Ausführungsbeispiel ist die Achse nicht durchgehend, sondern es befindet sich jeweils 1 Achsstummel auf jeder Seite der Halterung (7). Die Aufnahme für die Kapsel (5) ist in diesem Beispiel als Kunststoff Spritzgussteil ausgeführt und auf der Rückseite offen. Die beiden Seitenwände der Aufnahme für die Kapsel (5) mit den beiden Löchern für die Achsen, können daher leicht nach außen gebogen werden, um über die beiden Achsstummel geschoben zu werden und dann in ihre Ursprungsform zurück zu federn. Alternativ kann auch eine separate Achse verwendet werden, die durch die Aufnahme für die Kapsel (5) und die Halterung (7) durchgesteckt wird und dann gegen eine axiale Verschiebung durch eine Schraube gesichert wird. Die Aufnahme für die Kapsel (5) muss bei diesem Ausführungsbeispiel durch eine Verriegelung in der oberen Position unter dem Füllrohr (3) gehalten werden. Das ist in diesem Beispiel dadurch gelöst, dass der bewegliche Griff (11) über zwei Haken (12) verfügt, die auf der Rückseite der Aufnahme für die Kapsel (5) herausragen. Die Haken sind jeweils mittig auf den Innenseiten der Aufnahme für die Kapsel (5) über eine Achse mit derselben beweglich verbunden. Durch anheben des Griffs (11) werden dadurch die Haken (12) auf der Rückseite der Aufnahme für die Kapsel (5) abgesenkt. Der Griff (11) mit den Haken (12) ist so ausgeführt, dass er durch ein federndes Element belastet wird, welches die Haken (12) immer in die obere Position zurückführt, sobald der Griff (11) losgelassen wird. Wenn die Aufnahme für die Kapsel (5) in die Position unter dem Füllrohr (3) gedrückt wird, dann bewegen sich die beiden Haken (12) in die beiden Öffnungen (13) in der Halterung (7). Die schräge obere Fläche der Haken (12) wird dabei durch die obere Kante der Öffnungen (13) nach unten gedrückt, wenn sie sich in die Öffnungen (13) bewegen. Wenn die Haken (12) sich komplett in die Öffnungen (13) bewegt haben schnappen die Haken (12) nach oben hinter die Wandung der Halterung (7) und halten die Aufnahme für die Kapsel (5) in der Position unter dem Füllrohr (3). Wird in diesem Zustand der Griff(11) angehoben, dann senken sich die Haken (12) in den Öffnungen (13) ab und die Aufnahme für die Kapsel (5) kann noch vorne geschwenkt werden. In der Aufnahme für die Kapsel (5) ist in diesem Ausführungsbeispiel die Vertiefung (9) zur Aufnahme der Kapsel (10) in einem herausnehmbaren Einsatz (8) ausgeführt, der gegen einen anderen ausgetauscht werden kann, wenn ein anderer Typ von Kapsel verwendet werden soll.

In diesem Beispiel sind die Aufnahme für die Kapsel (5), die Halterung (7) und der austauschbare Einsatz (8) jeweils als separate spritzgegossene Kunststoffteile vorgesehen. Der Griff (11) ist als integraler Bestandteil der Aufnahme für die Kapsel (5) ausgeführt. Alle Teile können jedoch auch aus Metall gefertigt werden, zum Beispiel als Leichtmetall-Druckgussteile.

### Bezugszeichenliste

(1) Kaffeemühle
(2) Zugangsöffnung
(3) Füllrohr
(4) Stößel
(5) Aufnahme für die Kapsel
(6) Struktur mit der Funktion einer Achse
(7) Halterung
(8) austauschbarer Einsatz
(9) Vertiefung für die Kapsel
(10) wiederbefüllbare Kapsel
(11) Griff
(12) Haken
(13) Öffnungen

## Patentansprüche

1. Kaffeemühle (1) zum Mahlen von Kaffeepulver mit einer ein Füllrohr (3) aufweisenden Füllvorrichtung für wiederbefüllbare Kaffeekapseln (10), mit einer Zugangsöffnung (2), durch welche gemahlenes Kaffeepulver in das Füllrohr (3) fallen kann, und mit einem Stößel (4), der im Füllrohr (3) geführt ist und darin auf und ab bewegt werden kann, um das von der Kaffeemühle (1) durch die Zugangsöffnung (2) und das Füllrohr (3) in die Kapsel (10) gefallene gemahlene Kaffeepulver zu komprimieren, **dadurch gekennzeichnet, dass** unterhalb des Füllrohrs (3) eine Aufnahme für eine wiederbefüllbare Kapsel (5) angebracht ist, die auf der Oberseite über eine Vertiefung (9) zur Aufnahme einer wiederbefüllbaren Kapsel (10) verfügt und welche über eine Struktur mit der Funktion einer vertikalen Achse (6) in einer an der Kaffeemühle (1) befindlichen Halterung (7) gelagert ist und sich zur Seite schwenken lässt, so dass die Kapsel (10) in der Vertiefung (9) in den beiden Endpositionen der Schwenkbewegung entweder unter dem Füllrohr (3) zu liegen kommt und befüllt werden kann oder so weit unter dem Füllrohr (3) hervorgeschwenkt werden kann, dass sie nach oben entnommen werden kann.

2. Kaffeemühle (1) nach Anspruch 1, **dadurch gekennzeichnet, dass** die Halterung (7) für die Struktur mit der Funktion einer Achse (6) entweder integraler Bestandteil des Gehäuses der Kaffeemühle (1) ist, oder ein separates Teil, welches an die Kaffeemühle (1) angebaut ist.

3. Kaffeemühle (1) nach Anspruch 1 oder 2, **dadurch gekennzeichnet, dass** die Struktur mit der Funktion einer Achse (6) in der Halterung (7) fest gelagert ist und sich in der Aufnahme für die Kapsel (5) frei drehen kann oder dass die Struktur mit der Funktion einer Achse (6) sich in der Halterung (7) frei drehen kann und in der Aufnahme für die Kapsel (5) fest gelagert ist.

4. Kaffeemühle (1) nach einem der Ansprüche 1 - 3, **dadurch gekennzeichnet, dass** die Vertiefung (9) für die Kapsel (10) nicht direkt in der Aufnahme für die Kapsel (5) eingebracht ist sondern diese über einen austauschbaren Einsatz (8) verfügt, der an der schwenkbaren Aufnahme für die Kapsel (5) befestigt ist und in dem die Vertiefung für die Kapsel (9) eingebracht ist.

5. Kaffeemühle (1) zum Mahlen von Kaffeepulver mit einer ein Füllrohr (3) aufweisenden Füllvorrichtung für wiederbefüllbare Kaffeekapseln (10), mit einer Zugangsöffnung (2), durch welche gemahlenes Kaffeepulver in das Füllrohr (3) fallen kann, und mit einem Stößel (4) der im Füllrohr (3) geführt ist und darin auf und ab bewegt werden kann, um den von der Kaffeemühle (1) durch die Zugangsöffnung (2) und das Füllrohr (3) in die Kapsel (10) gefallenen Kaffee zu komprimieren, **dadurch gekennzeichnet, dass** unterhalb des Füllrohrs (3) eine Aufnahme für eine wiederbefüllbare Kapsel (5) angebracht ist, die auf der Oberseite über eine Vertiefung (9) zur Aufnahme einer wiederbefüllbaren Kapsel (10) verfügt und welche über eine lineare Führung verfügt, die eine lineare Bewegung der Aufnahme für die Kapsel (5) erlaubt, so dass die Kapsel (10) in der Vertiefung (9) in den beiden Endpositionen der linearen Bewegung entweder unter dem Füllrohr (3) zu liegen kommt und befüllt werden kann oder so weit unter dem Füllrohr (3) hervorgezogen werden kann, dass die Kapsel (10) nach oben entnommen werden kann.

6. Kaffeemühle (1) nach Anspruch 5, **dadurch gekennzeichnet, dass** die Vertiefung (9) für die Kapsel (10) nicht direkt in der Aufnahme für die Kapsel (5) eingebracht ist sondern diese über einen austauschbaren Einsatz (8) verfügt der an der Aufnahme für die Kapsel (5) befestigt ist und in dem die Vertiefung für die Kapsel (9) eingebracht ist.

7. Kaffeemühle (1) zum Mahlen von Kaffeepulver mit einer ein Füllrohr (3) aufweisenden Füllvorrichtung für wiederbefüllbare Kaffeekapseln (10), mit einer Zugangsöffnung (2) durch welche gemahlenes Kaffeepulver in das Füllrohr (3) fallen kann, und mit einem Stößel (4), der im Füllrohr (3) geführt ist und darin auf und ab bewegt werden kann, um den von der Kaffeemühle (1) durch die Zugangsöffnung (2) und das Füllrohr (3) in die Kapsel (10) gefallenen Kaffee zu komprimieren, **dadurch gekennzeichnet, dass** unterhalb des Füllrohrs (3) eine Aufnahme für eine wiederbefüllbare Kapsel (5) angebracht ist, die auf der Oberseite über eine Vertiefung (9) zur Aufnahme einer wiederbefüllbaren Kapsel (10) verfügt, die über eine Struktur mit der Funktion einer horizontalen Achse (6) verfügt, welche wiederum in einer an der Kaffeemühle (1) befindlichen Halterung (7) gelagert ist und eine horizontale Schwenkbewegung der Aufnahme für eine wiederbefüllbare Kapsel (5) erlaubt, so dass die Kapsel (10) in der Vertiefung (9) in den beiden Endpositionen der Schwenkbewegung entweder unter dem Füllrohr (3) zu liegen kommt und befüllt werden kann oder so weit unter dem Füllrohr (3) hervorgeschwenkt werden kann, dass sie nach oben entnommen werden kann.

8. Kaffeemühle (1) nach Anspruch 7, **dadurch gekennzeichnet, dass** die Vertiefung (9) für die Kapsel (10) nicht direkt in der Aufnahme für die Kapsel (5) eingebracht ist sondern diese über einen austauschbaren Einsatz (8) verfügt, der an der schwenkbaren Aufnahme für die Kapsel (5) befestigt ist und in dem die Vertiefung für die Kapsel (9) eingebracht ist.

9. Kaffeemühle (1) nach einem der Ansprüche 7 oder 8, **dadurch gekennzeichnet, dass** die Aufnahme für eine wiederbefüllbare Kapsel (5) über mindestens einen um eine horizontale Achse beweglichen Haken (12) mit einem Griff (11) verfügt, welcher sich so bewegen kann, dass die schräge Fläche des Hakens (12) beim Bewegen der Aufnahme für eine wiederbefüllbare Kapsel (5) gegen eine Fläche der Halterung (7), die hohl ist und mindestens eine Öffnung (13) hat, gegen die Kante derselben stößt, sich bewegt und beim weiteren Bewegen die schräge Fläche des Hakens (12) komplett in die Öffnung (13) gleitet und sich der Haken (12) dann hinter die Wand der hohlen Halterung (7) bewegt und damit die Aufnahme für eine wiederbefüllbare Kapsel (5) in einer Position hält, bei der die Kapsel direkt unter dem Füllrohr (3) liegt, wobei durch Drücken des Griffs (11) der Haken sich so bewegt, dass dessen Spitze nicht mehr hinter der Wand der hohlen Halterung (7) liegt sondern sich soweit bewegt, dass er genau durch die Öffnung (13) passt und damit die Aufnahme für eine wiederbefüllbare Kapsel (5) in die andere Endposition bewegt werden kann, in der die Kapsel (5) entnehmbar ist.

## Claims

1. A coffee grinder (1) for grinding coffee, comprising a filling device for refillable coffee capsules (10), including a filling tube (3), comprising an access opening (2), through which ground coffee can drop into the filling tube (3), and furthermore comprising a ram (4), which is guided in the filling tube (3) and can be moved up and down therein so as to compress the ground coffee that has dropped from the coffee grinder (1) through the access opening (2) and the filling tube (3) into the capsule (10), **characterized in that** a receptacle for a refillable capsule (5) is provided beneath the filling tube (3), which on the top side includes a depression (9) for receiving a refillable capsule (10) and which, by way of a structure having the function of a vertical shaft (6), is mounted in a mount (7) present at the coffee grinder (1) and can be pivoted to the side, so that the capsule (10) in the depression (9), in both end positions of the pivoting movement, ends up either beneath the filling tube (3) and can be filled, or can be pivoted out from beneath the filling tube (3) so far so as to be removable toward the top.

2. The coffee grinder (1) according to claim 1, **characterized in that** the mount (7) for the structure having the function of a shaft (6) is either an integral part of the housing of the coffee grinder (1), or a separate part that is attached to the coffee grinder (1).

3. The coffee grinder (1) according to claim 1 or 2, **characterized in that** the structure having the function of a shaft (6) is fixedly mounted in the mount (7) and can rotate freely in the receptacle for the capsule (5), or that the structure having the function of a shaft (6) can rotate freely in the mount (7) and is fixedly mounted in the receptacle for the capsule (5).

4. The coffee grinder (1) according to any one of claims 1 to 3, **characterized in that** the depression (9) for the capsule (10) is not directly introduced into the receptacle for the capsule (5), but comprises a replaceable insert (8), which is fastened to the pivotable receptacle for the capsule (5) and in which the depression for the capsule (9) is introduced.

5. A coffee grinder (1) for grinding coffee, comprising a filling device for refillable coffee capsules (10), including a filling tube (3), comprising an access opening (2), through which ground coffee can drop into the filling tube (3), and furthermore comprising a ram (4), which is guided in the filling tube (3) and can be moved up and down therein so as to compress the coffee that has dropped from the coffee grinder (1) through the access opening (2) and the filling tube (3) into the capsule (10), **characterized in that** a receptacle for a refillable capsule (5) is provided beneath the filling tube (3), which on the top side includes a depression (9) for receiving a refillable capsule (10) and which comprises a linear guide that allows a linear movement of the receptacle for the capsule (5), so that the capsule (10) in the depression (9), in both end positions of the linear movement, ends up either beneath the filling tube (3) and can be filled, or can be pulled out from beneath the filling tube (3) so far that the capsule (10) can be removed toward the top.

6. The coffee grinder (1) according to claim 5, **characterized in that** the depression (9) for the capsule (10) is not directly introduced into the receptacle for the capsule (5), but comprises a replaceable insert (8), which is fastened to the receptacle for the capsule (5) and in which the depression for the capsule (9) is introduced.

7. A coffee grinder (1) for grinding coffee, comprising a filling device for refillable coffee capsules (10), including a filling tube (3) comprising an access opening (2), through which ground coffee can drop into the filling tube (3), and furthermore comprising a ram (4), which is guided in the filling tube (3) and can be moved up and down therein so as to compress the coffee that has dropped from the coffee grinder (1) through the access opening (2) and the filling tube (3) into the capsule (10), **characterized in that** a receptacle for a refillable capsule (5) is provided beneath the filling tube (3), which on the top side includes a depression (9) for receiving a refillable capsule (10), which includes a structure having the function of a horizontal shaft (6), which in turn is mounted in a mount (7) present at the coffee grinder (1) and allows a horizontal pivoting movement of the receptacle for a refillable capsule (5), so that the capsule (10) in the depression (9), in both end positions of the pivoting movement, ends up either beneath the filling tube (3) and can be filled, or can be pivoted out from beneath the filling tube (3) so far so as to be removable toward the top.

8. The coffee grinder (1) according to claim 7, **characterized in that** the depression (9) for the capsule (10) is not directly introduced into the receptacle for the capsule (5), but comprises a replaceable insert (8), which is fastened to the pivotable receptacle for the capsule (5) and in which the depression for the capsule (9) is introduced.

9. The coffee grinder (1) according to either claim 7 or 8, **characterized in that** the receptacle for a refillable capsule (5) comprises at least one hook (12), which can be moved about a horizontal shaft, including a handle (11), which can be moved in such a way that the oblique surface of the hook (12), during a movement of the receptacle for a refillable capsule (5) against a surface of the mount (7) that is hollow and has at least one opening (13), strikes against the edge thereof, moves and, during further movement, the oblique surface of the hook (12) slides completely into the opening (13), and the hook (12) then moves behind the wall of the hollow mount (7), thereby holding the receptacle for a refillable capsule (5) in a position in which the capsule is located directly beneath the filling tube (3), wherein, as a result of the handle (11) being pushed, the hook moves in such a way that the tip thereof is no longer located behind the wall of the hollow mount (7), but moves so far so as to fit precisely through the opening (13), thus allowing the receptacle for a refillable capsule (5) to be moved into a different end position in which the capsule can be removed.

## Revendications

1. Moulin à café (1) permettant de moudre de la poudre de café avec un dispositif de remplissage présentant un tube de remplissage (3) pour des capsules de café (10) rechargeables, avec un orifice d'accès (2) par lequel la poudre de café moulue peut tomber dans le tube de remplissage (3), et avec un piston (4) qui est mené dans le tube de remplissage (3) et peut y être déplacé vers le haut et le bas, afin de comprimer la poudre de café moulue par le moulin à café (1) tombée par l'orifice d'accès (2) et le tube de remplissage (3) dans la capsule (10), **caractérisé en ce qu'**un réceptacle pour une capsule (5) rechargeable est rapporté en-dessous du tube de remplissage (3), qui dispose sur le côté supérieur d'un renfoncement (9) pour la réception d'une capsule (10) rechargeable et lequel est logé dans un support (7) se trouvant sur le moulin à café (1) par le biais d'une structure ayant la fonction d'un axe vertical (6) et qui peut pivoter sur le côté, de sorte que la capsule (10) peut être posée et remplie dans le renfoncement (9) dans les deux positions finales du mouvement de pivotement soit étant couchée en-dessous du tube de remplissage (3), soit peut être pivotée aussi loin vers l'avant en-dessous du tube de remplissage (3) pour qu'elle puisse être prélevée vers le haut.

2. Moulin à café (1) selon la revendication 1, **caractérisé en ce que** le support (7) pour la structure ayant la fonction d'un axe (6) fait soit partie intégrante du boitier du moulin à café (1), soit est une pièce séparée, laquelle est montée sur le moulin à café (1).

3. Moulin à café (1) selon la revendication 1 ou la revendication 2, **caractérisé en ce que** la structure ayant la fonction d'un axe (6) est logée fixe dans le support (7) et peut se mettre en rotation librement dans le réceptacle pour la capsule (5) ou que la structure ayant la fonction d'un axe (6) peut se mettre en rotation librement dans le support (7) et est logée fixe dans le réceptacle pour la capsule (5).

4. Moulin à café (1) selon l'une des revendications 1 à 3, **caractérisé en ce que** le renfoncement (9) pour la capsule (10) n'est pas directement rapporté dans le réceptacle pour la capsule (5) mais que celui-ci dispose un insert (8) échangeable qui est fixé sur le réceptacle pivotant pour la capsule (5) et lequel est rapporté dans le renfoncement pour la capsule (9).

5. Moulin à café (1) permettant de moudre de la poudre de café avec un dispositif de remplissage présentant un tube de remplissage (3) pour des capsules de café (10) rechargeables, avec un orifice d'accès (2) par lequel la poudre de café moulue peut tomber dans le tube de remplissage (3), et avec un piston (4) qui est mené dans le tube de remplissage (3) et peut y être déplacé vers le haut et le bas, afin de comprimer la poudre de café moulue par le moulin à café (1) tombée par l'orifice d'accès (2) et le tube de remplissage (3) dans la capsule (10), **caractérisé en ce qu'**en-dessous du tube de remplissage (3), il est rapporté un réceptacle pour une capsule (5) rechargeable, qui dispose sur le côté supérieur d'un renfoncement (9) pour la réception d'une capsule (10) rechargeable et lequel dispose d'un guidage linéaire qui permet un déplacement linéaire du réceptacle pour la capsule (5) de sorte que la capsule (10) peut être posée et remplie dans le renfoncement (9) dans les deux positions finales du mouvement linéaire soit en étant couchée en-dessous du tube de remplissage (3) soit être avancée aussi loin vers l'avant en-dessous du tube de remplissage (3) pour que la capsule (10) puisse être prélevée vers le haut.

6. Moulin à café (1) selon la revendication 5, **caractérisé en ce que** le renfoncement (9) pour la capsule (10) n'est pas directement rapporté dans le réceptacle pour la capsule (5), mais celui-ci dispose d'un insert (8) échangeable qui est fixé sur le réceptacle pour la capsule (5) et dans lequel le renfoncement pour la capsule (9) est rapporté.

7. Moulin à café (1) permettant de moudre de la poudre de café avec un dispositif de remplissage présentant un tube de remplissage (3) pour des capsules de café (10) rechargeables, avec un orifice d'accès (2) par lequel la poudre de café moulue peut tomber dans le tube de remplissage (3), et avec un piston (4) qui est mené dans le tube de remplissage (3) et peut y être déplacé vers le haut et le bas, afin de comprimer la poudre de café moulue par le moulin à café (1) tombée par l'orifice d'accès (2) et le tube de remplissage (3) dans la capsule (10), **caractérisé en ce qu'**en-dessous du tube de remplissage (3), il est rapporté un réceptacle pour une capsule (5) rechargeable, qui dispose sur le côté supérieur d'un renfoncement (9) pour la réception d'une capsule (10) rechargeable, qui dispose d'une structure ayant la fonction d'un axe horizontal (6), lequel est à son tour logé dans un support (7) se trouvant dans le moulin à café (1) et permet un mouvement de pivotement horizontal du réceptacle pour une capsule (5) rechargeable de sorte que la capsule (10) dans le renfoncement (9) dans les deux positions finales du mouvement de pivotement se trouve soit couchée en-dessous du tube de remplissage (3) et peut être remplie soit peut être pivotée vers le haut aussi loin sous le tube de remplissage (3) pour qu'elle puisse être prélevée par le haut.

8. Moulin à café (1) selon la revendication 7, **caractérisé en ce que** le renfoncement (9) pour la capsule (10) n'est pas directement rapporté dans le réceptacle pour la capsule (5), mais celui-ci dispose d'un insert (8) échangeable qui est fixé sur le réceptacle pivotant pour la capsule (5) et dans lequel le renfoncement pour la capsule (9) est rapporté.

9. Moulin à café (1) selon l'une des revendications 7 ou 8, **caractérisé en ce que** le réceptacle pour une capsule (5) rechargeable dispose d'au moins un crochet (12) mobile autour d'un axe horizontal avec une poignée (11), laquelle peut se déplacer de telle sorte que la surface inclinée du crochet (12), lors du déplacement du réceptacle pour une capsule (5) rechargeable, se déplace contre une surface du support (7) qui est creux et a au moins un orifice (13), pousse contre le bord de celle-ci, se déplace et lors d'un nouveau déplacement la surface inclinée du crochet (12), glisse complètement dans l'orifice (13) et que le crochet (12) se déplace alors de nouveau derrière la paroi du support (7) creux et ainsi maintient le réceptacle pour une capsule (5) rechargeable dans une position, dans laquelle la capsule repose directement en-dessous du tube de remplissage (3), où, par une pression de la poignée (11), le crochet se déplace de telle manière que sa pointe ne se situe plus derrière la paroi du support (7) creux mais se déplace aussi loin pour qu'il soit exactement ajusté à l'orifice (13) et qu'ainsi le réceptacle pour une capsule (5) rechargeable puisse être déplacé dans l'autre position finale dans laquelle la capsule (5) peut être prélevée.
